# EUROPEAN PATENT APPLICATION

(11) **EP 2 987 680 A1**
(43) Date of publication of application: **24.02.2016**
(21) Application number: 14181877.3
(22) Date of filing: 22.08.2014
(51) Int. Cl.: B60N 3/04

(54) **Vehicle floor mat and method for manufacturing a floor mat for a vehicle**

(71) Applicant: Ford Global Technologies, LLC, Dearborn, MI 48126 (US)
(72) Inventor: Turker, Emre, 34755 Atasehir / Istanbul (TR); Durademir, Ayhan, Maltepe / Istanbul (TR); Çimber, Volkan, Sarayli / Gölcük / Kocaeli (TR); Nogay, Ferit, Evler / Derince / Kocaeli (TR)
(74) Representative: Illing, Rolf

(57) **Abstract**

A method for manufacturing of a vehicle floor mat is provided. The method comprises the steps of
- Producing (S1) a front part of the vehicle floor mat with a first processing tool,
- Producing (S2) a rear part of the vehicle floor mat with a second processing tool,
- Joining (S3) the front part and the rear part of the vehicle floor mat.

## Description

The invention is related to a method for manufacturing a floor mat for a vehicle using a processing device with interchangeable processing tools for the production of a floor mat for a vehicle. In addition, the invention is related to a vehicle floor mat.

Vehicle floor boards are often covered by installed carpeting. In order to save the carpeted floor from normal depreciation by tear and wear, it can be protected by a floor mat. Every vehicle type needs a specific floor mat with a defined size. The manufacturing of vehicle floor mats is carried out by use of processing devices. Conventional processing devices are designed for the production of a vehicle floor mat with a defined size for a selected car type. In these devices the entire vehicle floor mat is produced by one processing device. Upon shifting the production of vehicle floor mats for certain vehicle types, wherein the vehicle floor mats are designed to have different sizes, the entire processing device for one specific type of vehicle floor mat needs to be exchanged for another specific processing device. As the processing devices are usually installed in production lines this involves a lot of effort due to both the heavy weight of the processing devices, which usually comprise many parts made of steel, and the dimensions of the processing devices. In addition the exchange is time-consuming. Last but not least, the processing devices require a lot of space for storing big processing tools while they are not needed.

It is the objective of the present invention to provide a method of manufacturing vehicle floor mats which is more efficient than conventional methods. It is also an object of the present invention to provide a vehicle floor mat which is produced more efficiently than conventional vehicle floor mats.

Throughout the description the invention the following definitions are used:

A "processing device" is a device for manufacturing a product, in particular for manufacturing a vehicle floor mat.

A "processing tool" is a part of a processing device. A processing tool as in present description is provided for the production of the front or the rear part of a vehicle floor mat.

A "production line" is a facility in a production hall, where at least one processing tool is arranged for manufacturing one or more products.

"Interchangeable" means that devices, as in this description particularly processing tools, can be exchanged for another device, or another processing tool, respectively.

A "floor mat for a vehicle" is a cover for the vehicle floor. The floor mat for a vehicle can be arranged on the blank metal of the floor of the vehicle body or on a carpet-like lining of the vehicle body. In this description the term "vehicle floor mat" is used as a synonym for "floor mat for a vehicle".

The "front part" of a vehicle floor mat is the part which is intended for being positioned at the area of the driver's seat and passenger's seat and "the rear part" is the part which is intended for being positioned at the area of the backseats.

"Left" and "right" of a vehicle floor mat refer to the orientation of the vehicle floor mat when looking, in a direction from the rear end to the front end of the vehicle, onto the room-side surface of the vehicle floor mat arranged in an appropriate vehicle.

The "room-side" surface of vehicle floor mat is designed to face the inner compartment of a vehicle or, in other words, to face upwards. The "frame-side" surface of the vehicle floor mat is designed to face the body frame of the vehicle or, in other words, downwards.

The first object is solved by the method of manufacturing vehicle floor mats as claimed in claim 1. The second object is solved by a vehicle floor mat as claimed in claim 9. Advantageous further developments of the invention are evident from the dependent claims, the figures and the example.

In a first aspect the invention refers to a method for the manufacture of a floor mat for a vehicle, comprising the steps of
- Producing a front part of the vehicle floor mat with a first processing tool,
- Producing a rear part of the vehicle floor mat with a second processing tool,
- Joining the front part and the rear part of the vehicle floor mat.

The inventive method is advantageous, because manufacturing two parts of the vehicle floor mats by use of two different processing tools, wherein one is used for producing the front part and the other one is used for producing the rear part of the vehicle floor mat, facilitates the use of smaller devices in comparison to complex processing devices which are needed for production of the entire vehicle floor mat. The method facilitates the cost effective exchange of the processing tools in comparison to moving processing devices with heavy weight and big dimensions, because only smaller parts have to be moved. Consequently, the inventive method saves time, space and costs. Furthermore, in cases where the front parts of vehicle floor mats can have same sizes for different car types but need to have different sizes for the rear parts, or likewise where the rear parts can have same sizes and the front parts need to be different, one processing tool may remain at the production line because only one processing tool needs to be exchanged. Using interchangeable processing tools for different versions of vehicle floor mats allows for producing different versions of vehicle floor mats by a simple combination of the processing tools, making the whole production process more flexible.

The processing tools used in the method can comprise all kind of tools which are suitable for manufacturing vehicle floor mats, including but not limited to injection molding tools, foam injection tools, and water jet cutting machines.

The material used for the production of the vehicle floor mats, or of their front and rear parts, respectively, may be any material suitable for producing vehicle floor mats. Vehicle floor mats are typically prepared of polymers, for instance of rubber or rubber-like material. The preferred material for the vehicle floor mats are thermoplastic polymers, preferably polypropylene and polyethylene. Thermoplastic polymers are particularly suitable for injection molding. Another preferred material for the manufacture of the vehicle floor mats is polyurethane, which is particularly suitable for foam injection.

In a preferred embodiment of the invention the first and second processing tool are provided within the same processing device in an interchangeable manner. This means that the processing device is formed to comprise the first and second processing tool at the same time or successively. This arrangement is advantageous, because while the front and rear parts of a vehicle floor mat are produced by the first processing tool and the second processing tool, respectively, they are still produced within the same device. This means that the produced front and rear parts are provided in close proximity, so that the step of joining the front and rear parts can follow immediately after their production without the need of shifting the parts to another device.

The steps of producing the front part and of producing the rear part of the vehicle floor mat are preferably carried out at the same time within the same processing device. Consequently the first and second processing tools need to be arranged in the processing device at the same time. The advantage of this arrangement is that less time is needed for manufacturing a vehicle floor mat compared to successive use of the first and second processing tools. The first and second processing tool may be connected with each other by any means known in the art, e.g. by bolted connection or screw joint. However, the first and the second processing tools may also be able to work independently, i.e. each processing tool can produce a front or rear part of a vehicle floor mat without being attached to the respective other tool.

If the first and second processing tools are arranged within the same processing device at the same time, they can preferably each be interchanged independently of each other, so that one processing tool remains at the production line while the other is exchanged. This is advantageous in case a vehicle floor mat shall be produced which comprises a front or rear part which is compatible with a front or rear part, respectively, of a vehicle floor mat that has been produced by the previous tool combination.

Apart from comprising a first and second processing tool for producing a front part and a rear part of a vehicle floor mat, the processing device is designed to comprise appliances for joining the front and the rear part of the vehicle floor mat. The joining process of the front part and the rear part of the vehicle floor mat may use any suitable joining technology, such as welding, adhesive bonding, mechanical bonding, or by use of fasteners. The joining methods of welding and adhesive bonding are preferred, and the method of welding is particularly preferred. The processing device can also comprise other tools and appliances which are necessary for manufacturing vehicle floor mats.

The processing tools preferably comprise all of the appliances for production of a vehicle floor mat. In particular, the processing tools preferably each comprise appliances for injection molding. Additionally or alternatively the processing tools may each comprise appliances for polymer foam injection. Furthermore, the processing tools may each also comprise appliances for water jet cutting. Preferably, at least one of the processing tools comprised in the processing device also comprises appliances for joining the front and the rear parts with each other. Furthermore, at least one of the processing tools may include appliances for forming structures into the surface of the vehicle floor mat, e.g. for embossing, debossing, notching or sealing grooves.

Advantageously the groove is designed to have a V-shape, because the slopes of a V are able to hide deformations from the view of any spectators. With other words at least one V-shaped groove is preferably formed at the line where the front and the rear parts of the vehicle floor mat are joined. The V-shape can have an orientation with the open part to the room-side or to the car-side, however it is preferred if the V-shape is oriented as "upside down", so that the open part of the V is at the bottom facing the car-side and the tip is at the top facing the room-side.

A second aspect of the invention is related to a floor mat for a vehicle, wherein the front part and the rear part of the vehicle floor mat have been joined after being each produced by corresponding processing tools of a processing device. In other words, an inventive vehicle floor mat is made of a front part and a rear part which are joined together.

Preferably the vehicle floor mat has a V-shaped groove at the line where the front part and the rear parts of the vehicle floor mat are joined. In other words, at least one V-shaped groove is formed at the line where the front and the rear parts of the vehicle floor mat are joined. The V-shape can have an orientation with the open part to the room-side or to the car-side, however it is preferred if the V-shape is oriented as "upside down", so that the open part of the V is at the bottom facing the car-side and the tip is at the top facing the room-side.

The vehicle floor mat may consist of any material which is suitable for vehicle floor mats. The material of the vehicle floor mat comprises preferably a polymer. More preferred is a rubber-like material, which comprises all materials including natural rubber itself as well as various types of elastomers, such a thermoplastic elastomers, particularly polyolefin blends such as polypropylene and polyethylene. It is also preferred if the material of the vehicle floor mat comprises polyurethane.

Embodiments of the invention are described in conjunction with the accompanying figures.
- Figure 1: shows a flow chart of an embodiment of the inventive method.
- Figure 2: shows an embodiment of a vehicle floor mat with a single front part and a single rear part.
- Figure 3: shows an embodiment of a vehicle floor mat which joined front and rear parts.
- Figure 4: shows a cross-sectional view of a V-shaped groove present in a vehicle floor mat.

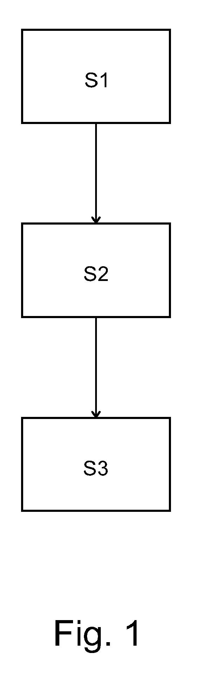

In the embodiment of the inventive method as shown in figure 1 manufacturing of a vehicle floor mat, comprises a step S1 of producing a front part of the vehicle floor mat with a first processing tool, a step S2 of producing a rear part of the vehicle floor mat with a second processing tool, and a step S3 of joining the front part and the rear part of the vehicle floor mat S3. Although steps S1 and S2 are shown to be performed after each other, the steps may as well be performed simultaneously.

The processing tools of the present embodiment comprise all of the appliances necessary for production of a vehicle floor mat. In particular, the processing tools comprise appliances for injection molding and/or appliances for polymer foam injection. In addition, at least one of the processing tools of the present embodiment also comprises appliances for joining the front and the rear parts with each other. Furthermore, the processing tools of the present embodiment may each also comprise appliances for water jet cutting and/or appliances for forming structures into the surface of the vehicle floor mat, e.g. for embossing, debossing, notching or sealing grooves.

In the present embodiment, the first and second processing tool used for manufacturing the vehicle floor mats each are about the same size. However the sizes of the processing tools may differ from each other depending on the kind or the size of the vehicle floor mat part to be produced.

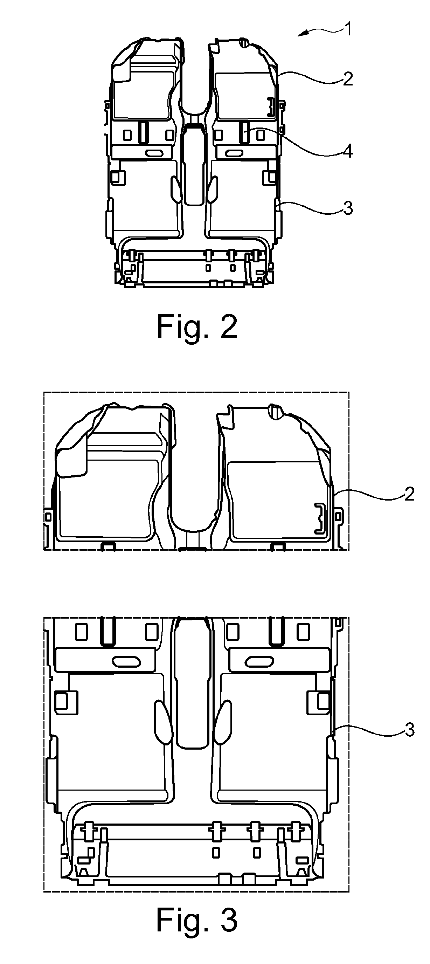

Figure 2 shows an inventive vehicle floor mat 1 which has been produced according to the inventive method. The Floor mat of figure 2 is shown after completion of the manufacturing process, i.e. after the front part 2 and the rear part 3 of the vehicle floor mat 1 have been joined. A groove 4 is notched into the surface of the vehicle floor mat 4.

In the manufacturing process of the vehicle floor mat 1, the front part 2 and the rear part 3 are produced by a first and a second processing tool of a processing device, respectively, so that they are present as separated parts, as shown in figure 3, prior to the joining process.

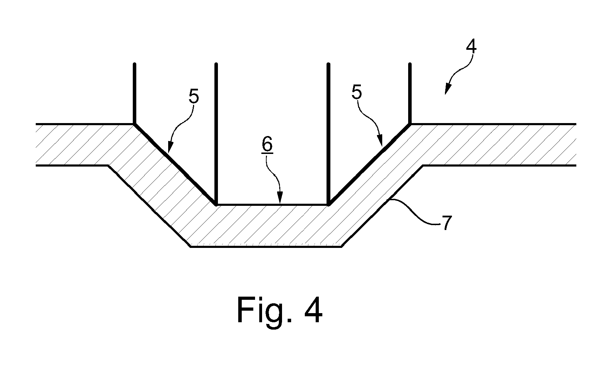

The groove 4 which is notched into the surface of the vehicle floor mat 1 has a V-shape with a flattened tip. In the embodiment as shown in figure 4, the slopes 5 of the V have an angle of inclination of 45°. However, other inclinations are possible. The slopes of the V may have an inclination in the reange of 10° to 80°, preferably in the range of 20° to 70°, more preferred of 30° to 60°, yet more preferred of 40° to 50°.

The groove 4 has a flat part 6 resembling the flattened tip of the V-shape between the slopes 5. However, the tip of the V may as well be a perfect point or roundish, although it is preferred to be flatted. If the tip is flattened the flatted part may have a width between 10 and 100%, preferably between 20 and 90% and more preferred between 30 and 80%, of the length of a slope of the V-shape.

Although slopes 5 of the V have an angle of inclination of 45° in the present embodiment the slopes of the V may have an angle of inclination in the range of 10° to 80°, preferably in the range of 20° to 70°, more preferred in the range of 30° to 60° and yet more preferred in the range of 40° to 50°.

The groove 4 of the mat according to the present embodiment is shown upside down in figure 4, so that a surface 7 is part of the room side of the vehicle floor mat.

In a preferred embodiment at least one groove 4 is introduced at the position where the front and the rear parts 2, 3 are joined. An advantage of the at least one groove 4 is that the surface deformations in the material, particularly at the position where the front and the rear parts 2, 3 are joined, can be compensated, which contributes to an impression of good quality of the vehicle floor mat 1. Depending on the design of the material, several grooves can be introduced in the vehicle floor mat 1. It is preferred to introduce two grooves in the material, one of which is on the left side of the vehicle floor mat and the other on the right side. The at least one groove 4 is preferably introduced in the area in front of the front seats, so that it is visible for the driver and the passenger. The groove may be formed, for example, by embossing, debossing, notching, or sealing and may have any orientation. However, it is preferred that the groove 4 is oriented lengthwise, i.e. in the longitudinal orientation of the vehicle floor mat.

Since various variations of the described embodiments are possible the invention shall only be limited by the scope of the claims.

## Claims

1. Method for manufacturing of a vehicle floor mat (1), comprising the steps of
- Producing a front part (2) of the vehicle floor mat (1) with a first processing tool,
- Producing a rear part (3) of the vehicle floor mat (1) with a second processing tool,
- Joining the front part and the rear part of the vehicle floor mat (1).

2. Method according to claim 1, wherein the first and second processing tool are designed to be used within the same processing device in an interchangeable manner.

3. Method according to claim 1 or 2, wherein the steps of producing the front part (2) and of producing the rear part (3) of the vehicle floor mat (1) are carried out at the same time within the same processing device.

4. Method according to claim 3, wherein the first processing tool and the second processing tool are designed to be interchangeable independently of each other.

5. Method according to any of the foregoing claims, wherein a groove (4) is formed at the joining line of the front (2) and rear parts (3) of the vehicle floor mat (1).

6. Method according to claim 5, wherein the groove (4) has a V-shape.

7. Method according to any of the foregoing claims, wherein the first and second processing tools comprise appliances for polymer foam injection.

8. Method according to any of the foregoing claims, wherein the interchangeable processing tools comprise appliances for water jet cutting.

9. Vehicle floor mat 1 which is made of a front part (2) and a rear part (3) which are joined together.

10. Vehicle floor mat (1) according to claim 9, wherein the vehicle floor mat (1) has a V-shaped cross-section groove (4) at the line where the front part (2) and the rear part (3) of the vehicle floor mat (1) are joined.

11. Vehicle floor mat (1) according to claim 10, wherein the V-shaped groove (4) has slopes (5) with an angle of inclination of 45° and a flat part (6) between the slopes (5).

12. Vehicle floor mat (1) according to any of the claims 9 to 11, wherein the material of the vehicle floor mat is a polymer.

13. Vehicle floor mat (1) according to any of claims 9 to 12, wherein the material of the mat comprises a thermoplastic polymer.

14. Floor mat according to any of claims 9 to 12, wherein the material comprises polyurethane.
